# EUROPEAN PATENT SPECIFICATION

(11) **EP 0 369 758 B1**
(45) Date of publication and mention of the grant of the patent: **24.05.1995**
(21) Application number: 89311805.9
(22) Date of filing: 15.11.1989
(51) Int. Cl.: G11B 5/53, G11B 5/588, G11B 15/18

(54) **Rotating head apparatus**
Gerät mit rotierendem Kopf
Appareil à tête rotative

(30) Priority: 15.11.1988 JP 287973/88
(43) Date of publication of application: 23.05.1990
(73) Proprietor: MATSUSHITA ELECTRIC INDUSTRIAL CO., LTD., Kadoma-shi, Osaka-fu 571 (JP)
(72) Inventor: Hashi, Hideyuki, Kadoma-shi Osaka-fu, 571 (JP); Murata, Shigeki, Nara-shi Nara-ken, 630 (JP)
(74) Representative: Dawson, Elizabeth Ann

(56) References cited:
- US-A- 4 356 522
- US-A- 4 719 525
- PATENT ABSTRACTS OF JAPAN vol. 11, no. 165 (E-510)27 May 1987

## Description

This invention relates to a rotating head apparatus used for, for instance, a magnetic recording apparatus.

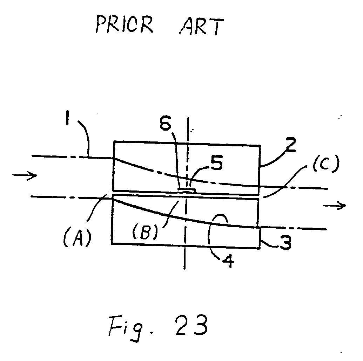

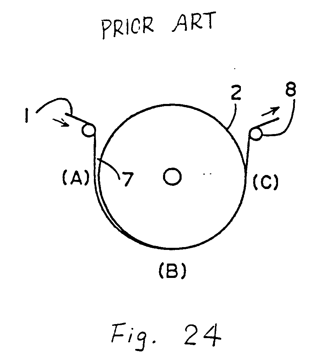

The conventional rotating head apparatus hitherto used has a structure as shown in Fig. 23 and Fig. 24. That is, a rotary cylinder 2 which rotates at 1,000 rpm - 2,000 rpm relative to a magnetic tape 1 and a stationary cylinder 3, which does not rotate, guide the magnetic tape 1. On the stationary cylinder 3, a lead 4 is provided for regulating the position of the magnetic tape 1 at the time of running. A rotating head 5 mounted on the rotary cylinder 2 is projected by several 10 microns outward from the periphery of the rotary cylinder 2. The number 6 represents a recess in which the magnetic head is disposed.

The rotary cylinder 2 rotates at 1,000 - 2,000 rpm and at the same time the magnetic tape 1 runs while being wound slantwise (helical) with a specified angle around the rotary cylinder 2 and the stationary cylinder 3 with a specified tape tension. The rotating head 5, which is mounted on the rotary cylinder 2 by projecting itself by several 10 microns outward from the periphery of the rotary cylinder, rotates by making contact with the tape 1.

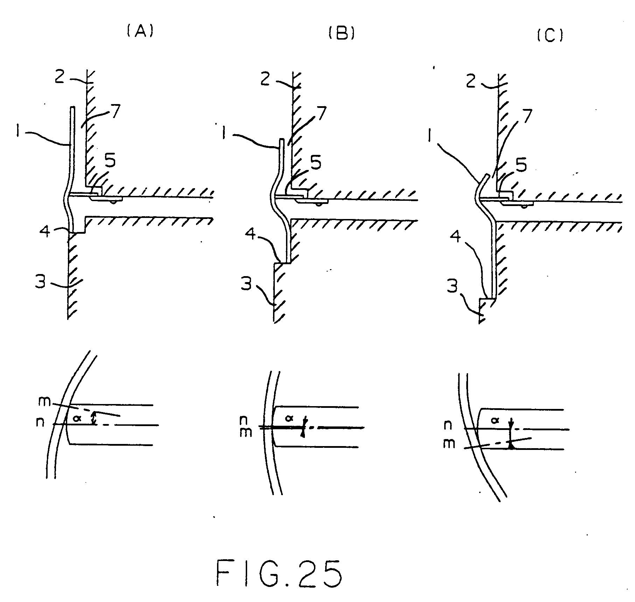

With the conventional structure, an air film 7 is. formed on the periphery of the cylinder as shown in Fig. 24. So, the contact state of the rotating head 5 with the magnetic tape 1 changes at different positions in the. helical path, for example at a tape contact inlet (A), a tape contact middle position (B) and a tape contact outlet (C). Thus, as shown in Fig. 25, assuming that an angle α be an angle formed in the tape width direction, perpendicular to the tape running direction, by the center line n of the magnetic gap of the rotating head and a normal line m to a tape-contacting surface of the rotating head contacting the magnetic tape, the angle α changes depending on the scanning position of the rotating head.

Furthermore, because the state of air film 7 varies as the cylinder rotating speed varies, there is such a problem that the angle α formed between the lines m and n varies in accordance with the variations in the cylinder rotating speed.

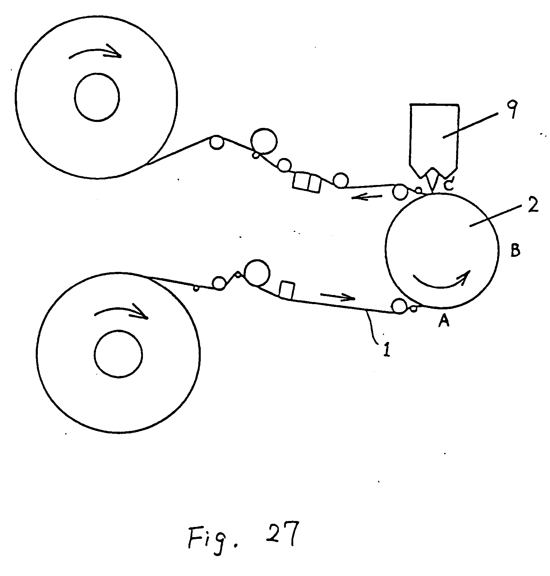

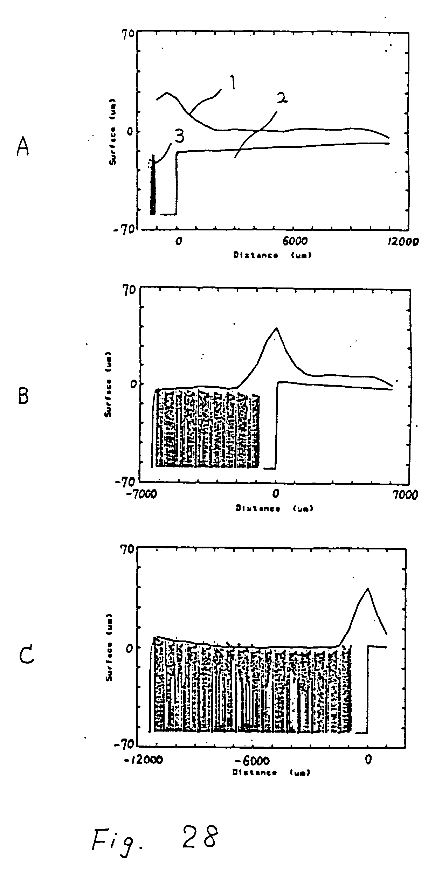

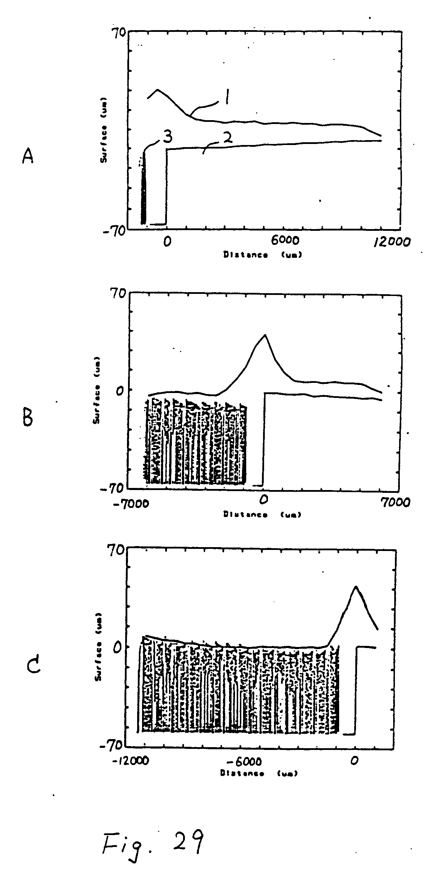

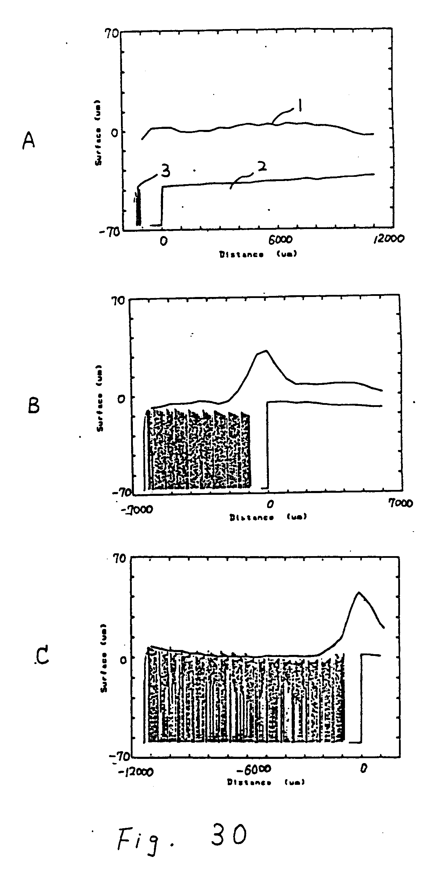

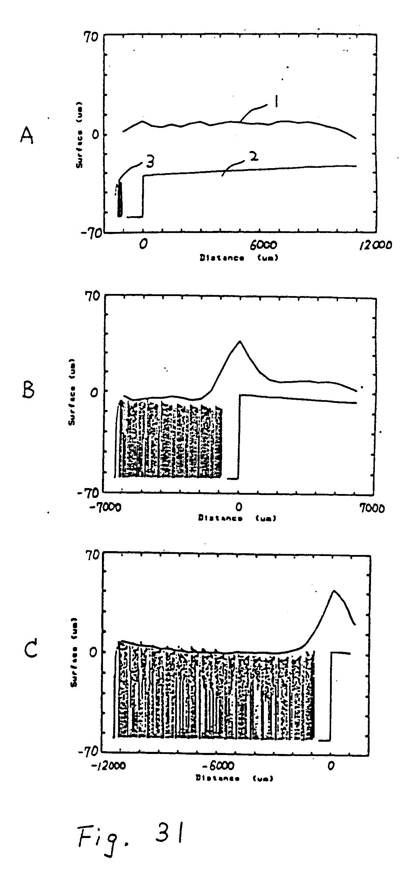

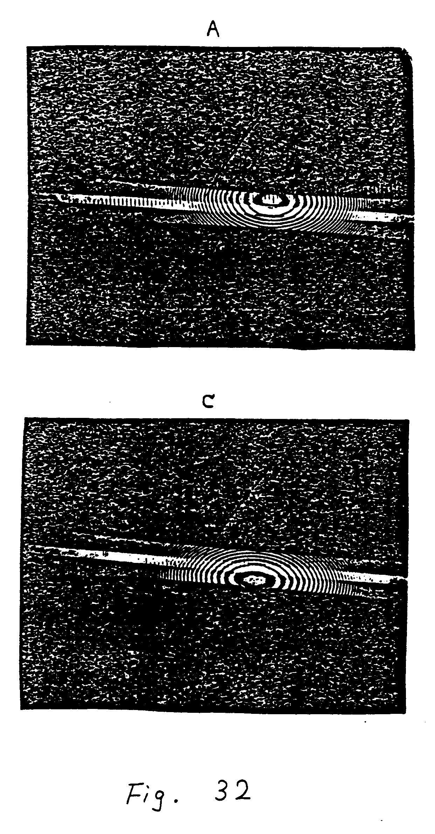

Experimental data are shown in Fig. 28 to Fig. 31 on the contact state made between rotary head 5 and tape 1. The data in Fig. 28 to Fig. 31 represent measurements of a distance between micrometer 9 and the tape 1 at the respective points of the tape contact inlet (A), middle position (B) and tape contact outlet (C), by scanning with the micrometer in a cross direction of the tape and also by changing the rigidity of the tape and the cylinder rotating speed in an experimental installation shown in Fig. 27. Experimental conditions are shown respectively as follows: in Fig. 28 cylinder rotating speed 1,800 rpm, high tape rigidity; in Fig. 29 cylinder rotating speed 1,800 rpm, low tape rigidity; in Fig. 30 cylinder rotating speed 5,400 rpm, low tape rigidity; and in Fig. 31 cylinder rotating speed 5,400 rpm, high speed rigidity. Fig. 32 shows experimental data, obtained through the use of an interference fringe, of the contact state between the head and the tape at the position of the tape contact inlet (A) and the tape contact outlet (C), and from this figure it becomes clear that the center of contact between the head and the tape at the tape contact inlet (A) locates higher than the head end, while at the tape contact outlet (C) the center of contact between the head and the tape locates lower than the head end. From these experimental data, it is understood that the contact state between the tape and the head varies with the variation of the cylinder rotating speed, tape rigidity, and the scanning position of the rotating head.

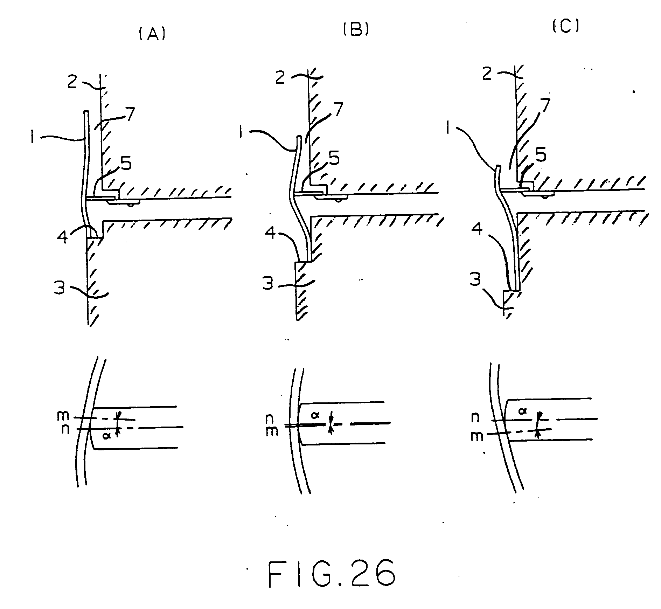

Fig. 25 and Fig. 26 show examples of contact states between the rotating head 5 and tape 1 of the conventional rotating head apparatus, in which the tape rigidity of Fig. 26 is higher than that of Fig. 25, where α is the angle formed between the lines m and n. As the space to the tape 1 near the magnetic gap becomes larger in accordance with the angle α which becomes larger, signal recording and reproducing performances reduce with larger space loss. With the conventional rotating head apparatus, the existence of larger value α (for example, at the tape inlet (A) and the tape outlet (C) in Fig. 24) often causes the problem of lowering the signal recording and reproducing performances. The variations in tape rigidity and thickness following the variation in the kind of the tape also cause a problem of changing the value α as shown in Fig. 25 and Fig. 26.

Assuming that an angle β be an angle formed in the tape longitudinal direction, parallel to the tape running direction, by the center line n of the magnetic gap of the rotating head 5 and the normal line m to the contact surface between the tape 1 and the rotating head 5, the space to the tape 1 near the magnetic gap becomes larger as the value of β becomes larger, so that space loss becomes larger, thereby lowering the performances of signal recording and reproducing. Such a case occur frequently that the value of β does not come to almost 0 as shown in Fig. 33 and Fig. 34. Fig. 35 shows measurements of the value β made in accordance with the cylinder rotating speed and scanning position of the head. The value of β, like that of α, changes in accordance with the variations of the cylinder rotating speed, tape rigidity, and scanning position of the rotating head.

To prevent the change of the angle α or the angle β dependent on the scanning position of the rotating head, such a method is known that deviates the rotating head in the tape width direction or in the tape longitudinal direction according to the scanning position of the rotating head as shown in Japanese Patent Publication No. 61-144721 published on July 2, 1986 and Japanese Patent Publication No. 63-4249 published on January 28, 1988.

Japanese Patent Publication No. 61-144721 discloses a rotating head apparatus which has a means for detecting a rotational position of the rotating head relative to the stationary cylinder, and a means for deviating the rotating head in a direction parallel to the tape running direction according to the detected rotational position of the rotating head so as to keep an optimum contact (β=0) between the rotating head and the magnetic tape at any scanning position. Japanese Patent Publication No. 63-4249 discloses a rotating head apparatus which has a means for detecting a rotational position of the rotating head relative to the stationary cylinder, and a means for deviating the rotating head in a direction parallel to the tape width direction according to the detected rotational position of the rotating head so as to keep an optimum contact (α=0) between the rotating head and the magnetic tape at any scanning position.

To move the rotating head as above, the apparatus has a circuit for generating from an output signal of the rotational position detecting means a drive voltage signal which is a cyclic saw-tooth waveform signal synchronized with the rotation of the rotating head. The rotating head is driven by the drive voltage signal to change the amount of its deviation gradually in each scanning cycle.

However, in these prior art references, no consideration is made on the change of the angle α or the angle β dependent on the kind of the tape or on the rotational speed of the rotating head.

An object of this invention is to provide a rotating head apparatus for preventing signal recording or reproducing performance from lowering, by improving the contact state of a magnetic tape and a rotating head in accordance with variations in the kind of the tape and the cylinder rotating speed by keeping the value of α or β almost 0°.

In order to achieve the above object a rotating head comprising:
a cylinder which guides a magnetic tape along a helical path over a specific circumferential angle, said cylinder including a rotary cylinder which rotates at a specific rotational speed;
a rotating head which is mounted on said rotary cylinder so as to rotate at said specific rotational speed and has a magnetic gap for recording signals on and reproducing signals from said magnetic tape; and
moving means for moving said rotating head relative to said rotary cylinder so as to change a contact state of said rotating head with respect to said magnetic tape;
characterised by further comprising:
a discriminating means for discriminating the kind of said magnetic tape and outputting a signal indicative of the discriminated kind of said magnetic tape;
a rotational speed detecting means for detecting the rotational speed of said rotating head and outputting a signal indicative of the detected rotational speed; and
control means for controlling said moving means according to at least one of the output signal from said discriminating means and the output signal from said rotational speed detecting means to keep said rotating head in such a contact state with said magnetic tape that a center line of said magnetic gap coincides with a normal line to a contacting surface between said rotating head and said magnetic tape.

In a preferred embodiment, the control means includes a rotational phase detector for detecting a rotational phase of the rotating head, a saw-tooth waveform voltage signal generator for generating from an output of the rotational phase detector a periodic saw-tooth waveform voltage signal synchronized with the rotation of the rotating head, and a voltage level control circuit for controlling the peak level of the saw-tooth waveform voltage signal according to the output of the discriminating means. The moving means is driven by the saw-tooth waveform voltage signal with the controlled peak level.

This invention prevents signal recording or reproducing performance from lowering based on the above structure, by decreasing space loss with the aid of optimum control of the position to stabilize the contact state between the tape and head.

Embodiments of the invention will now be described by way of example only and with reference to the accompanying drawings in which:

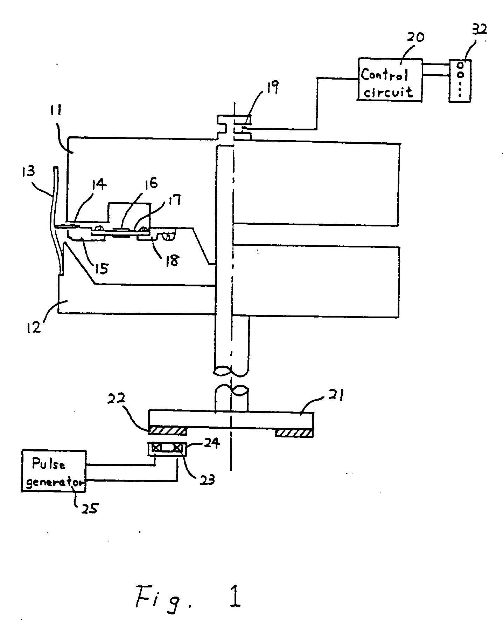

Fig. 1 is a cross section view showing a major part of a rotating head apparatus of a first embodiment of the present invention;

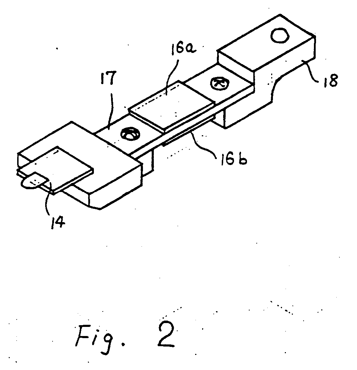

Fig. 2 is a perspective view showing a part of the rotating head apparatus of the first embodiment of the present invention;

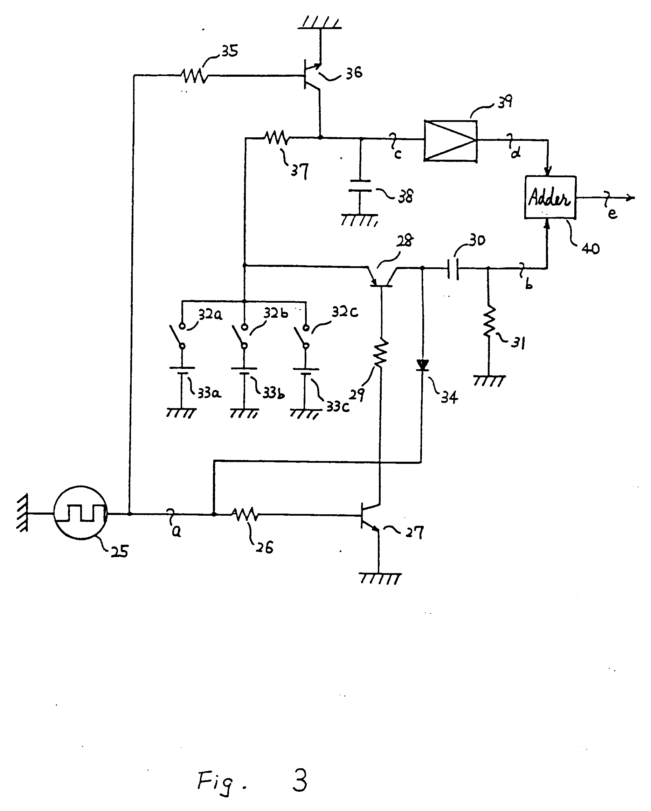

Fig. 3 is a circuit diagram showing a control circuit of the first embodiment of the present invention;

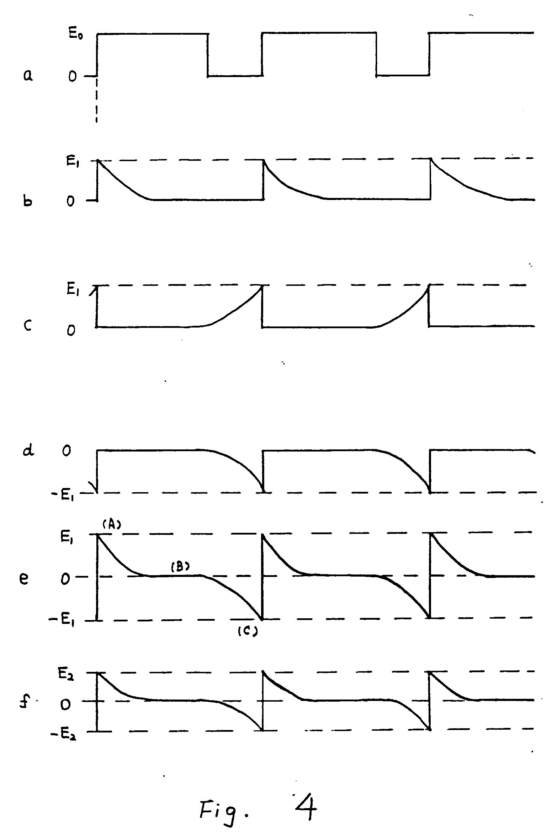

Fig. 4 is a signal waveform diagram for explaining an operation of a driving circuit of the first embodiment of the present invention;

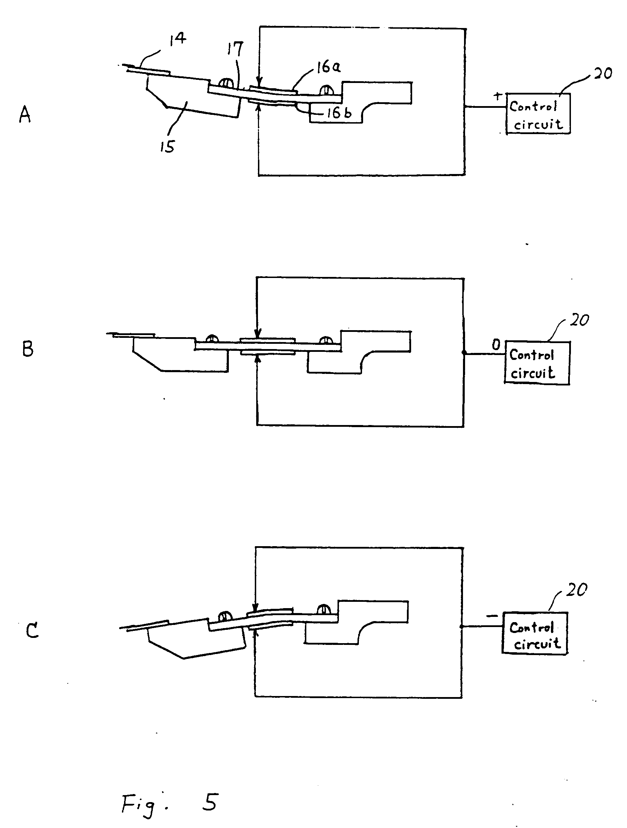

Fig. 5 is a diagram for explaining an operation of the first embodiment of the present invention;

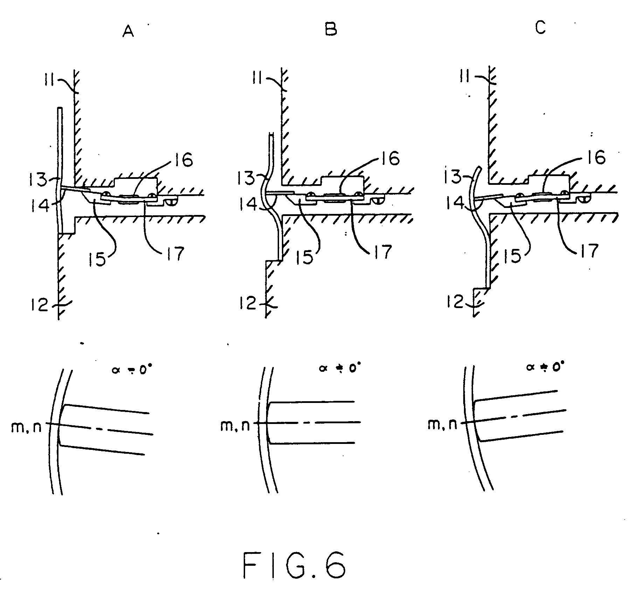

Fig. 6 is a cross section view showing a major part of the rotating head apparatus of the first embodiment of the present invention, in which (A) shows an enlarged view at the tape contact inlet, (B) shows an enlarged view at the middle position, and (C) shows an enlarged view at the tape contact outlet;

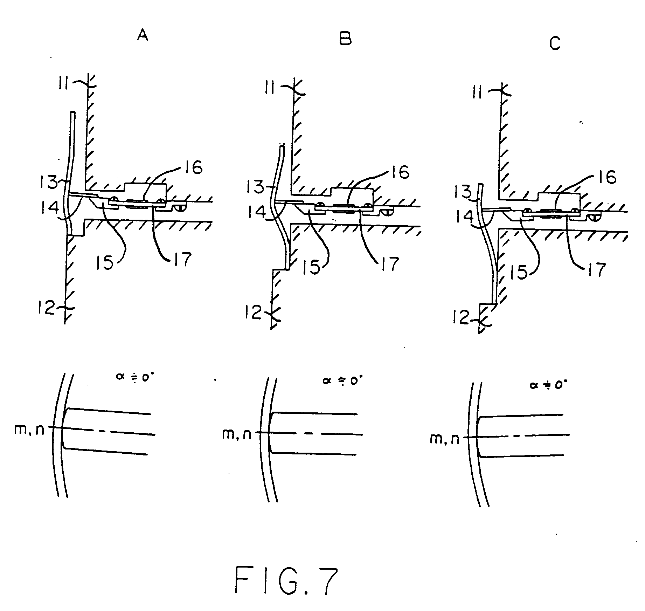

Fig. 7 is a cross section view showing the major part of the rotating head apparatus of the first embodiment of the present invention;

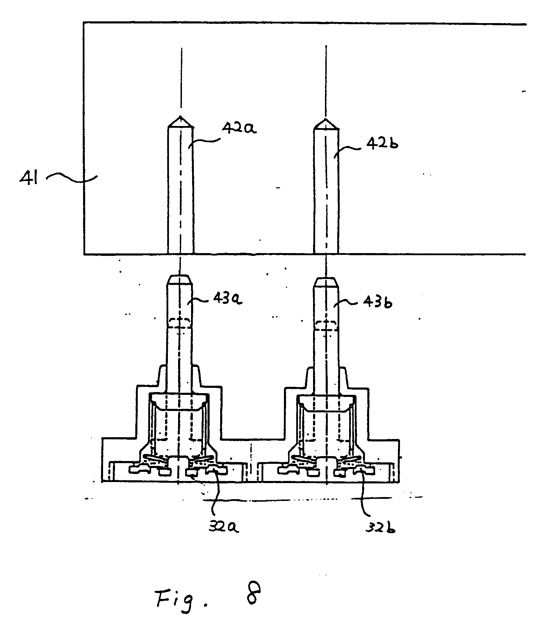

Fig. 8 shows one example of a detecting means of the first embodiment of the present invention;

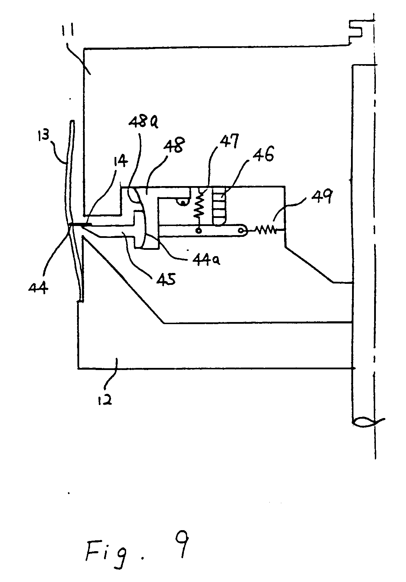

Fig. 9 is a cross section view showing a major part of a rotating head apparatus of a second embodiment of the present invention;

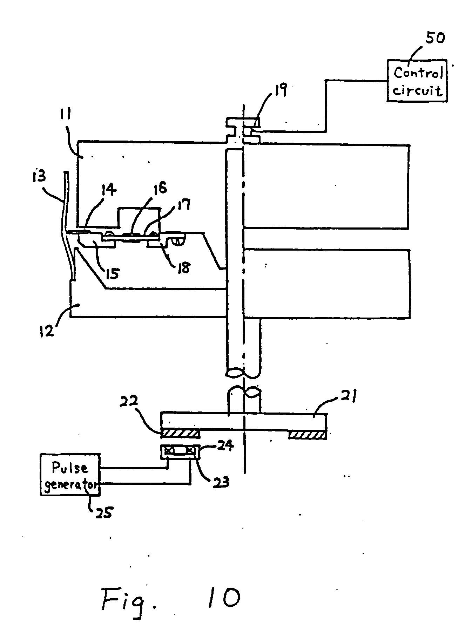

Fig. 10 is a cross section view showing a major part of a rotating head apparatus of a third embodiment of the present invention;

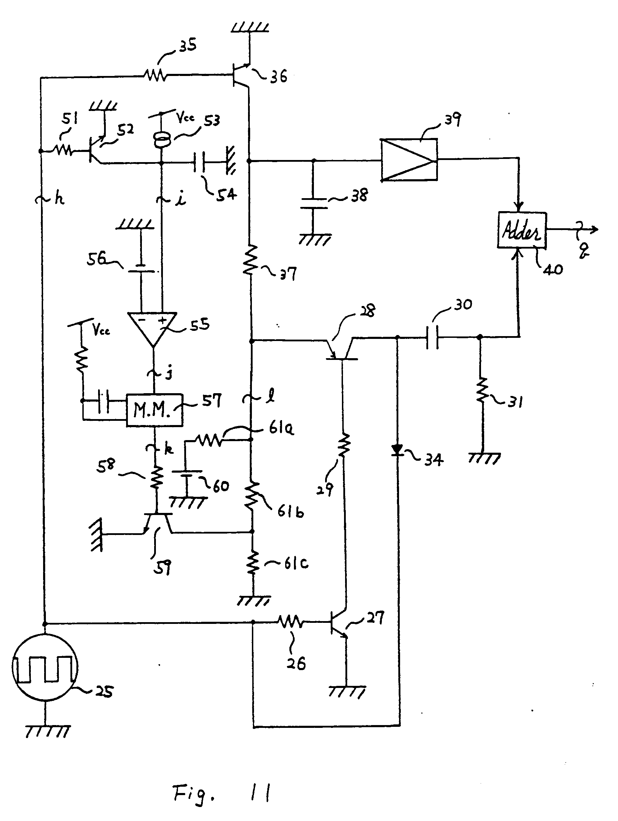

Fig. 11 is a circuit diagram showing a control circuit of the third embodiment of the present invention;

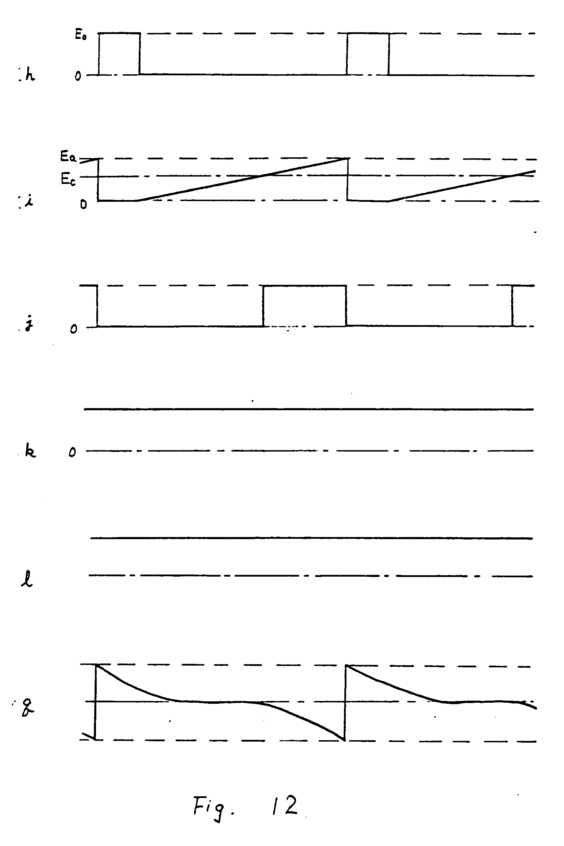

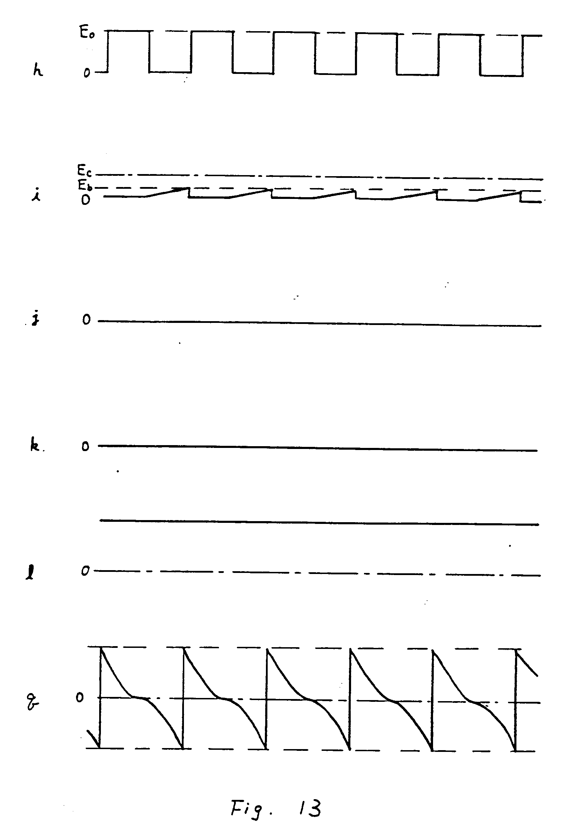

Fig. 12 and Fig. 13 are signal waveform diagrams showing an operation of a driving circuit of the third embodiment of the present invention;

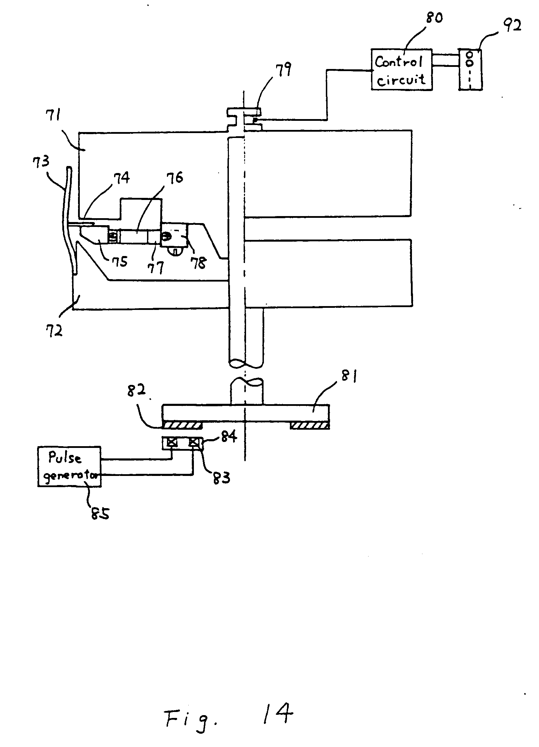

Fig. 14 is a cross section view showing a major part of a rotating head apparatus of a fourth embodiment of the present invention;

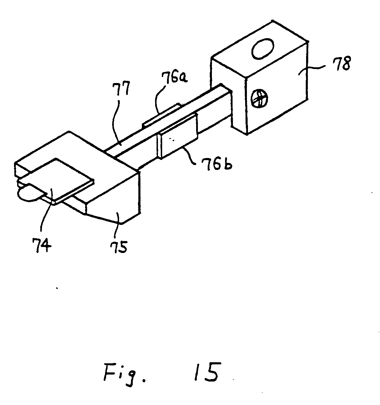

Fig. 15 is a perspective view showing a structure of a major part of the rotating head apparatus of the fourth embodiment of the present invention;

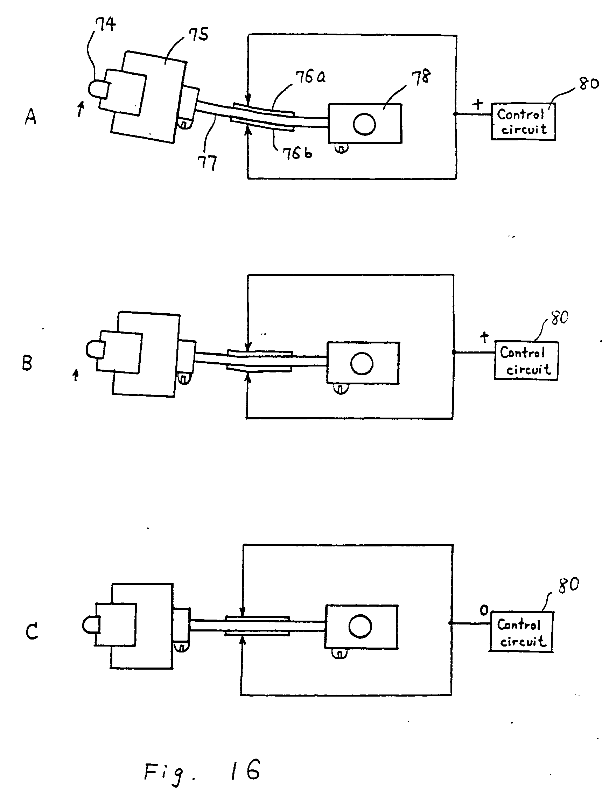

Fig. 16 is a diagram showing an operation of the rotating head of the fourth embodiment of the present invention;

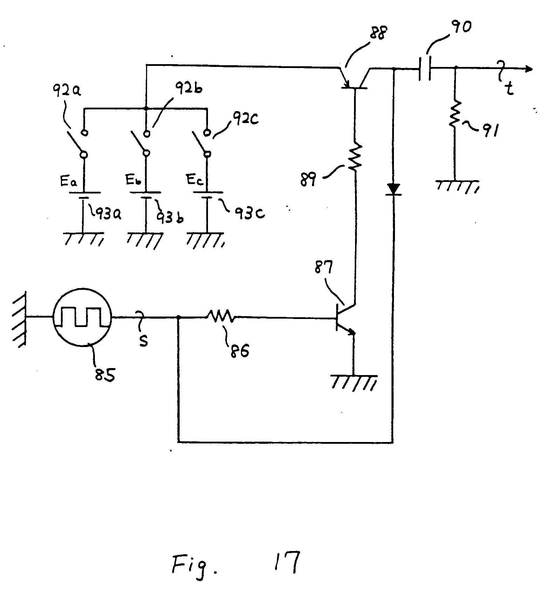

Fig. 17 is a circuit diagram showing a control circuit of the fourth embodiment of the present invention;

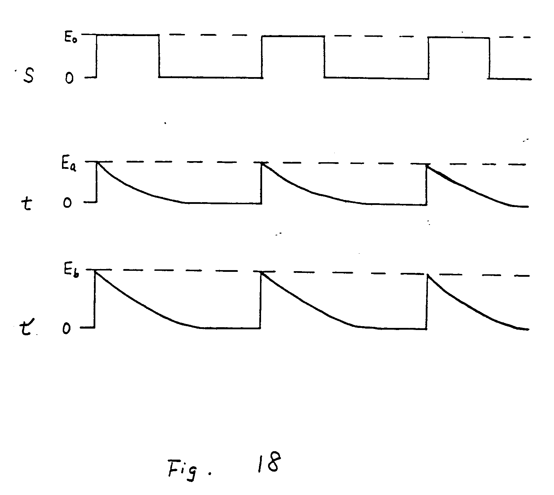

Fig. 18 is a signal waveform diagram showing an operation of a driving circuit of the fourth embodiment of the present invention;

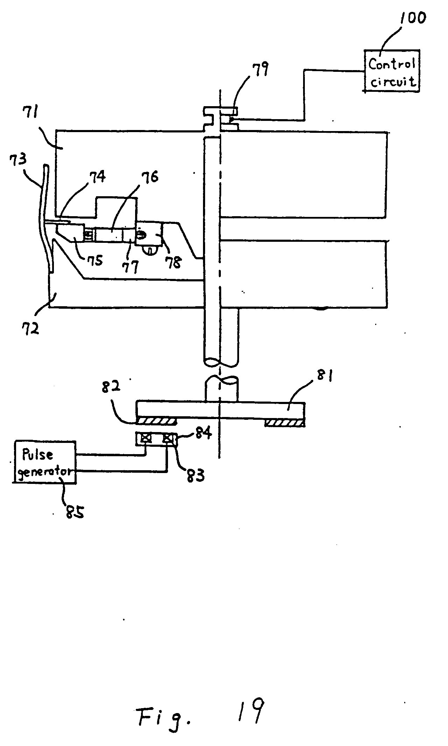

Fig. 19 is a sectional view showing a structure of a major part of a rotating head apparatus of a fifth embodiment of the present invention;

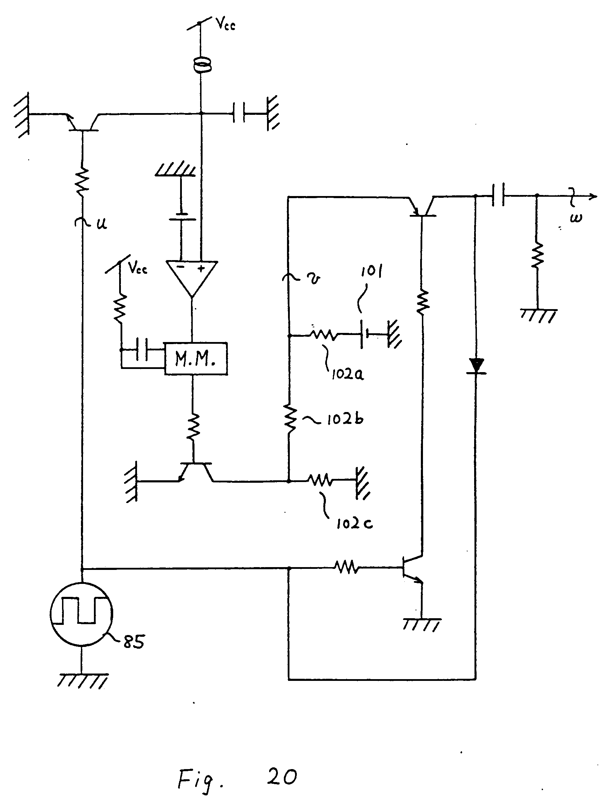

Fig. 20 is a circuit diagram showing a control circuit of the fifth embodiment of the present invention;

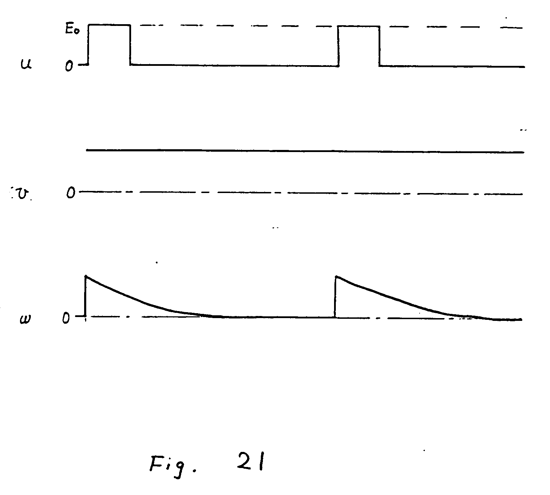

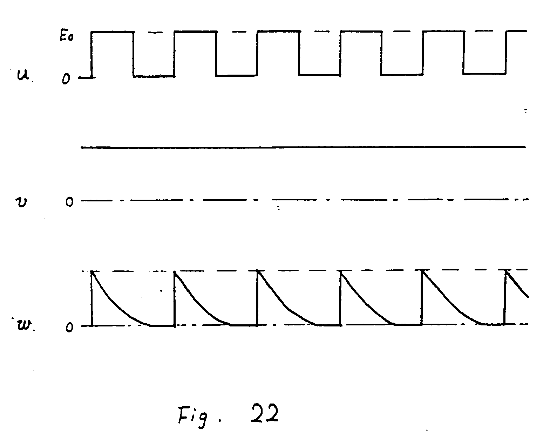

Fig. 21 and Fig. 22 are signal waveform diagrams showing an operation of a driving circuit of the fifth embodiment of the present invention;
Fig. 23 is a side view of a conventional rotating head apparatus;
Fig. 24 is a top view of the conventional rotating head apparatus;
Fig. 25 is a cross section showing a major part of the conventional rotating head apparatus, in which (A) shows an enlarged view at the tape contact inlet, (B) shows an enlarged view at the middle position, and (C) shows an enlarged view at the tape contact outlet;
Fig. 26 is a cross section showing the major part of the conventional rotating head apparatus, in which (A) shows an enlarged view at the tape contact inlet, (B) shows an enlarged view at the middle position, and (C) shows an enlarged view at the tape contact outlet;
Fig. 27 is a schematic diagram showing an experimental apparatus;
Fig. 28 through Fig. 31 are experimental data;
Fig. 32 is experimental data in which contact state between the head and the tape is seen at the positions of the tape contact inlet (A) and the tape contact outlet (C) by utilizing the interference fringe;

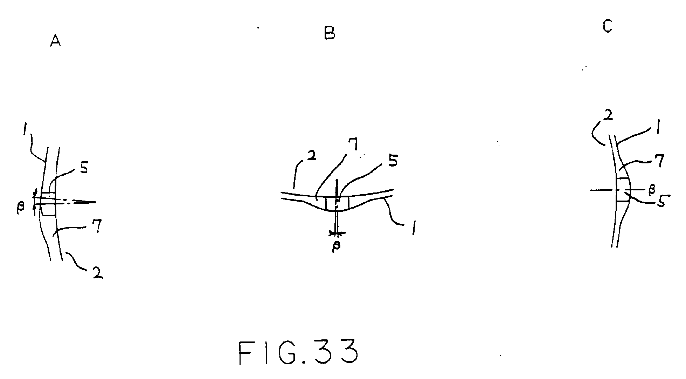

Fig. 33 is a cross section of a part of the conventional rotating head apparatus, in which (A) shows an enlarged view at the tape contact inlet, (B) shows an enlarged view at the middle position, and (C) shows an enlarged view at the tape contact outlet;

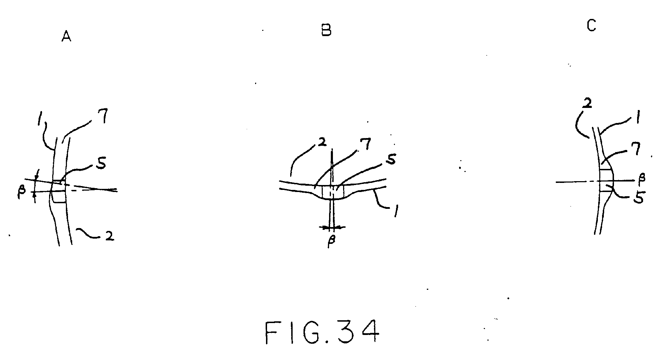

Fig. 34 is a cross section of a part of the conventional rotating head apparatus, in which (A) shows an enlarged view at the tape contact inlet, (B) shows an enlarged view at the middle position, and (C) shows an enlarged view at the tape contact outlet; and

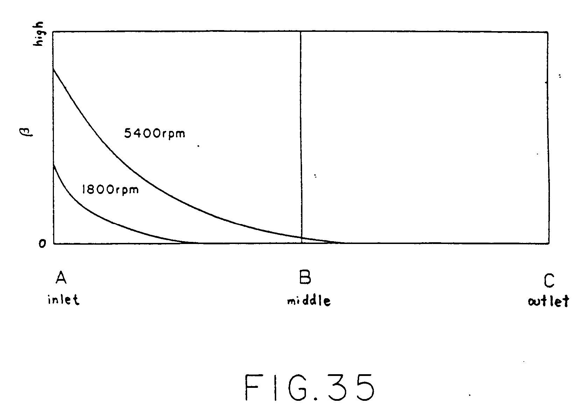

Fig. 35 shows measurement data.

Fig. 1 shows a structure of a rotating head apparatus of a first embodiment of the present invention. In this embodiment, a rotating head is deviated in a direction perpendicular to the tape running direction to keep in optimum contact with a tape according to the kind of the tape. In Fig. 1, a rotating head 14 attached to a head mounting table 15 which is made of an insulating material is fixed to a rotary cylinder 11 via electromechanical conversion elements 16 and 17, and a frame 18. The head 14 may be one of a pair of rotating heads apart by, for example, 180° from each other. A slip ring 19 as a known means transmits a signal from a control circuit 20 to the electromechanical conversion elements 16 and 17. The electromechanical conversion elements 16 and 17 are displaced by an electric signal. The details of the electromechanical conversion elements 16 and 17 are shown in Fig. 2. In Fig. 2, a thin phosphor bronze plate 17 is supported by a frame 18, and provided on opposite major surfaces thereof with piezoelectric ceramics 16a and 16b at the middle part. The plate 17 allows an electric voltage to be applied to the piezoelectric ceramics 16a and 16b. A flexible material like the phosphor bronze plate 17 shows such a behavior as bending like a bow when a voltage is applied to the piezoelectric ceramics 16a and 16b. The bending direction is determined by the characteristics of the piezoelectric ceramics and the polarity of the voltage to be applied. Such a structure is widely known as the piezobimorph. Therefore, applying a voltage will bend the electromechanical conversion elements 16 and 17 upward as shown in Fig. 5(A). On the contrary, reversing the polarity of the voltage to be applied to each piezoelectric ceramic will bend the elements downward as shown in Fig. 5(C). When no voltage is applied, they become parallel with the frame 18 as shown in Fig. 5(B). In this way, the rotating head moves pivotally to keep optimum contact with the tape.

Keeping always the value of α zero will allow a stable signal transmission between the rotating head 14 and the tape 13, by changing a head support in accordance with the contact state between the rotating head 14 and the tape 13 as shown in Fig. 5 against the variation of normal line m to the contact plane of the tape 13 and the rotating head 14, as shown in Fig. 25(A) through (C) (in case rigidity of the tape is low) or in Fig. 26(A) through (C) (in case rigidity of the tape is high).

Namely, in the position (angle of rotation ϑ = 0°) at the tape contact inlet (A) in Fig. 6, because the angle α formed between the normal line m to the contact surface of the rotating head 14 with the tape 13, and the center line of the magnetic gap of the rotating head 14 is larger, the value of α is made nearly 0° by applying a control voltage as shown in Fig. 5(A) from the control circuit 20.

Following this, while the rotating head 14 moves from the position of the tape contact inlet (A) (angle of rotation ϑ = 0°), the control voltage from the control circuit 20 is set so that the angle α will always become nearly 0°. Therefore, at the middle position (B), the position of the tip of the rotating head 14 (magnetic gap) comes to the position as shown in Fig. 6(B). Even while the position comes from the middle position (B) (angle of rotation ϑ = 90°) to the position (angle of rotation ϑ = 180°) of the tape contact outlet (C), the control voltage from the control circuit 20 is set so that the angle α will always come to nearly 0°.

Therefore, at the position of the tape contact outlet (C), the position of the tip (magnetic gap) of the rotating head 14 will come to the position as shown in Fig. 6(C). By setting the control voltage so that the angle α of the rotating head 14 becomes always 0° as shows in Fig. 6(A), (B), and (C), the simple structure as shown above allows the contact state with the tape 13 near the magnetic gap of the rotating head 14 to be optimum, thus making it possible to keep the space loss minimum.

However, when the kind of the tape is changed as shown in Fig. 25 and Fig. 26 of the conventional example for example, the contact state (the value of α) between the tape and the head also changes. Therefore, by setting a selecting switch 32 (See Fig. 1) to select the corresponding kind of the tape, the control circuit 20 sets the control voltage so that the value α is set to 0° in accordance with an output of the selecting switch 32.

First of all, selecting the kind of the tape with the selection switch 32 will cause the control circuit 20 to generate an output voltage according to the selected kind of tape and drive the electromechanical conversion elements 16 and 17 through the slip ring 19, and will then allow the locus of round movement of the rotating head 14 to be changed in accordance with the selected kind of tape. Fig. 7 shows a contact state between the head 14 and tape 13 in case the rigidity of the tape is higher than that of the tape in Fig. 6. Although the operation in Fig. 7 is the same as in Fig. 6, the value of α is smaller than that of Fig. 6 because the rigidity of the tape is higher than that of Fig. 6 (see Fig. 25 and 26). Therefore, a smaller amount of deviation of the head than the case of Fig. 6 is caused by lowering the value of the control voltage.

Then, detailed explanation will follow for the control circuit 20 and the selecting switch 32 in Fig. 1.

Fig. 3 shows a circuit diagram of the circuit 20 and switch 32 for generating a voltage applied to the piezoelectric ceramic 16. Explanation on the circuit operation of Fig. 3 follows below by use of Fig. 4.

The operation reference signal of the circuit shown in Fig. 3 is generated by detecting the rotary phase of the rotating head 14 by a pulse generator 25. This is carried out by arranging two magnets 22 on the lower surface of the rotary plate 21 which rotates in one body with the rotating head 21 and a coil 23 and a yoke 24 opposing the magnets 22 as shown in Fig. 1. Namely, the relationship of the arrangement among the rotating head 14, magnet 22 and yoke 24, and coil 23 is made workable so that magnet 22 and yoke 23, and coil 23 will come closer each other when the rotating head 14 plunges into the tape 13. Then, when the rotating head 14 plunges into the tape 13, the magnet 22 passes near the coil 23 and then an instantaneous current is generated on the coil 23, thus a trigger is generated by the pulse generator 25. Assuming that the rotating head 14 be rotating at 30 round per second, a trigger with a period of 1/60 second is generated, so that a pulse with a period of 1/60 second as shown in Fig. 4(a) is generated by the pulse generator 25. Therefore, the time at which this pulse (reference) signal is built up and the time at which the rotating head 14 plunges into the tape end comes to the same time.

When the reference signal comes to a high voltage, transistors 27 and 28 are closed via a resistor 26, so that a differential wave form as shown in Fig. 4(b) is generated by a capacitor 30 and a resistor 31 at b part. The peak value of this differential wave form is the value determined by a power source 33 (33a-33c). That is, with the selection switch 32 (32a-32c), turning a selecting button 32a to ON will make the peak value E₁ of the power source 33a, turning a selecting button 32b to ON will make the peak value E₂ of the power source 33b, and turning a selecting switch 32c to ON will make the peak value E₃ of the power source 33c. Thereafter, an explanation will follow of the selecting switch 32a turned to ON. In this case the peak value comes to E₁.

When the reference signal comes to a low voltage, the transistors 27 and 28 become open, so that the electric charge of the capacitor 30 is discharged through a diode 34. Also, the reference signal controls a transistor 36 via a resistor 35. Because the transistor is closed when the reference signal is at the high voltage, the charge at a capacitor 38 is almost nothing. However, when the reference signal is at the low voltage, the transistor 36 opens and the charge of the capacitor 38 will rise at the rate of a time constant to be determined by a resistor 37 and the capacitor 38. That is, at the point C in Fig. 3 a voltage wave form as shown in Fig. 4(C) is generated in accordance with the reference signal. Therefore, the wave form in Fig. 4(C) is converted into a wave form as shown in Fig. 4(d) by an inverting amplifier 39. Furthermore, since adding a signal in Fig. 4b and a signal in Fig. 4d by an adder 40 provides a periodic saw-tooth waveform voltage signal as shown in Fig. 4e, applying this signal to the piezoelectric ceramic 16 will allow the rotating head 14 to be at a state as shown in Fig. 5(A) at (A) in Fig. 25, while to be at a state as shown in Fig. 5(B) at (B) in Fig. 25, and to be at a state as shown in Fig. 5(C) at (C) in Fig. 25. In addition, because a selecting switch 32 in Fig. 1 allows the peak value as shown in Fig. 4e to be altered, deviation of the head can be changed according to the kind of tape. In case the rigidity of the tape is higher (see Fig. 26), the value of α is smaller, so that it is necessary to make the deviation of the head smaller. Then assuming E₁>E₂, the peak value is made E2 by turning ON the selecting button 32b, thereby leading the signal to be applied to the piezoelectric ceramic 16 to the one as shown in Fig. 4f. Therefore, the deviation of the head becomes smaller than the state where the selecting button 32a is turned ON, thereby making it possible to always make the value of α nearly 0.

As mentioned above, according to the present embodiment, a simple structure allows the contact state between the tape and the rotating head to be improved depending upon the kind of the tape, and can provide a rotating head apparatus which prevents the performance of signal recording and reproduction from lowering.

In the present embodiment, selecting buttons are employed as the selecting switch, it is not confined within the present embodiment only and the same effect is obtainable by turning switches 32a and 32b ON/OFF by use of cassette detection holes 42a and 42b of a cassette 41 as shown in Fig. 8. In Fig. 8, in order to set the switch 32a ON for instance, the cassette detection hole 42a may be closed and the cassette detection hole 42b may be opened. Pins 43a and 43b are to be inserted to the holes 42a and 42b, respectively.

In the present embodiment, although the viewpoint is focused only on the rigidity of the kind of the tape, it is not limited to this embodiment and is possible to control deviation of the head with provisions like the selecting switch by focussing the viewpoint on other factors like tape thickness, etc.

Furthermore, means for moving the rotating head may be constructed as shown in Fig. 9, not only limiting the method as shown above. In Fig. 9, 45 is a lever, 48 is a guide member, the shape of each of parts 45a and 48a is an arc whose center is positioned at the tip of the magnetic gap of a rotating head 14. The lever 45 is tensioned with a tension spring 47 so that it is always in contact with a piezoelectric ceramic 46 and is furthermore tensioned with a tension spring 49 so that the part 45a is in contact with the part 48a. Therefore, the lever 45 turns by expansion of the piezoelectric ceramic 46 with its fulcrum on the center of curvature in a direction of thichness near the magnetic gap on the rotating head 14. The method of applying a voltage to the piezoelectric ceramic 46 may be done in accordance with the kind of the tape as shown in Fig. 4e and f by the method described before. According to the embodiment in Fig. 9, there is such an advantage that the scanning locus of the rotating head against the tape 13 becomes straight because the tip of the rotating head does not move.

A third embodiment of the present invention will be described below. In this embodiment, a rotating head is deviated in a direction perpendicular to the tape running direction according to the rotation speed of the cylinder to keep optimum contact with a tape. Fig. 10 shows a cross section of a major part of the third embodiment of the present invention, and the construction is almost the same as the first embodiment but a control circuit 50 is different. As is seen from the experimental data in Fig. 28 to Fig. 31, the higher the rotation speed of the cylinder, the larger the amount of lifting of the tape, and thus the amount of deviation of the head should be larger as the amount of curling becomes larger at the tape end. In the first embodiment, the control voltage is applied in accordance with the kind of the tape, but in the third embodiment the control voltage in accordance with the rotation speed of the cylinder is applied to the piezoelectric ceramic. Fig. 11 shows a circuit diagram showing the details of the control circuit 50. In Fig. 11 the peak value of the differential wave form is varied in accordance with the rotation speed of the cylinder. Explanation follows with reference to Fig. 11, Fig. 12, and Fig. 13. Fig. 12 shows the case in which the rotation speed of the cylinder is at 1800 rpm, and Fig. 13 shows the case in which the rotation speed is at 5400 rpm. When a pulse generated by the pulse generator 25 in the same manner as in the first embodiment closes a transistor 52 via a resistor 51 when it is a high voltage, a constant current 53 is discharged by the transistor 52. Therefore, no current will flow to point i in Fig. 11. Then, as the transistor 52 will open when the generated pulse comes to a lower voltage level, the voltage wave form as shown in Fig. 12-i or Fig. 13-i will be generated because a part of constant current 53 flows to a capacitor 54 at point i in Fig. 11. Supposing that a peak value of Fig. 12-i be Ea and a peak value in Fig. 13-i be Eb, a relation of Ea > Eb arise from the figure. Therefore, supposing the value of a power source 56 be Ec (Ea > Ec > Fb), a voltage wave form as shown in Fig. 12-J or Fig. 13-j will arise at point j in Fig. 11 by a comparator 55. By applying this voltage wave form to a mono-multi vibrator 57 whose time constant T is 1/60 sec. or more, a voltage wave form as shown in Fig. 12-k or Fig. 13-k is generated at point k in Fig. 11. That is, the rotation speed of 1,800 rpm will come to a high voltage while the rotation speed of 5,400 rpm to a low voltage. Therefore, supposing that the value of a power source 60 be Ed, a resistor 61a be Ra, a resistor 61b be Rb, the value of a resistor 61c be Rc, as a transistor 59 will be closed through a resistor 58 when point k in Fig. 11 is in high voltage, the current from the power source 60 will flow to the transistor 59, and the voltage at point ℓ in Fig. 11 becomes Ed·Rb / (Ra + Rb).

Also, as the transistor 59 opens when point k in Fig. 11 is in low voltage, the voltage at point ℓ in Fig. 11 becomes Ed·(Rb + Rc) / (Ra + Rb + Rc). Supposing here that Ra = Rb = Rc, the voltage at point ℓ is Ed/2 at the rotation speed of 1,800 rpm, while 2Ed/3 at the rotation speed of 5,400 rpm. This value corresponds to the peak value in the embodiment, and the remaining circuit configuration is the same as the case of Fig. 3. Therefore, the voltage wave form at point q in Fig. 11 becomes as shown in Fig. 12-q or Fig. 13-q.

By applying the voltage wave q as outputted from the control circuit 50 to the piezoelectric ceramic 16, the head 14 is deviated. As mentioned before, the higher rotation speed of the cylinder causes the greater lifting of the tape, and thus the resultant tape curling becomes larger. But, as seen from Fig. 12-q and Fig. 13-q, the optimum contact between the head and the tape can be kept regardless of the cylinder rotation speed because the quantity of deviation of the head becomes larger at the higher cylinder rotation speed.

Although in this embodiment a case is shown that two kinds of cylinder speeds, 1,800 rpm and 5,400 rpm, are used with one cylinder, it is not limited within the scope of this embodiment alone, i.e. such rotation speeds as 1,800 rpm and 3,600 rpm will be also applicable. Also, the method of deviating the head is not limited to the present embodiment alone.

A fourth embodiment of the present invention is shown. In this embodiment, a rotating head is deviated in a direction parallel to the tape running direction according to the kind of the tape to keep in optimum contact with the tape. Fig. 14 is a structural view showing the fourth embodiment of the present invention. A rotating head 74 mounted on a head mounting table 75 made of an insulating material is fixed to a rotary cylinder via electromechanical conversion elements 76, 77 and a frame 78. A slip ring 79, as is already known, is used for transmitting signals from a control circuit 80 to the electromechanical conversion elements 76 and 77. The electromechanical conversion elements 76 and 77 cause a displacement by an electrical signal, and the details of the electromechanical conversion elements 76 and 77 are shown in Fig. 15. In Fig. 15, a thin phosphor bronze plate 77 is supported with a frame 78, and is provided on its opposite major surfaces at the middle thereof with piezoelectric ceramics 76a and 76b. Therefore, as shown in Fig. 16(A) or (B) by applying a voltage, the electromechanical conversion elements 76 and 77 will bend in an arrow direction, parallel to the tape running direction. When not applying a voltage, the elements 76 and 77 become parallel with the frame 78 as shown in Fig. 16(C). By shifting the head in this manner, keeping the value of β always 0° will allow stable signal transmission to be made between the rotating head 74 and the tape 73.

However, a variation in the kind of the tape, for example, as shown in Fig. 33 and Fig. 34 changes contact state (value of β) between the tape and the head. So by setting a selection means 92 (see Fig. 14.) to select the kind of the tape, control circuit 80 generates a proper voltage in accordance with an output of the selection means.

The locus of rotary movement of the rotating head 74 is changed according to the kind of the tape, by first selecting the kind of the tape with the selection means 92, and moving the electromechanical conversion elements 76 and 77, through the slip ring 79 with an output voltage of the control circuit 80 depending on the selected kind of the tape.

In case the rigidity of the tape is small according to experimental results in Fig. 33 and Fig. 34 the quantity of head deviation may be increased by increasing the value of the control voltage because the value of β is larger than the case that the rigidity of the tape is high.

Explanation will follow in detail with regard to the control circuit 80 and the selection button 92 is Fig. 14. Fig. 17 shows a circuit configuration of the control circuit 80 and the selection switch 92 (92a-92c) to apply voltage to the piezoelectric ceramic 76. The motion reference signal of the circuit shown in Fig. 17 is generated by detecting rotary phase of the rotating head 74 by a pulse generator 85 (Fig. 18-s). Explanation for this is omitted as this is carried out in the same method as the first embodiment. As transistors 87 and 88 are closed via a resistor 86 when the reference signal becomes a higher voltage, a differential wave form is generated by a capacitor 90 and a resistor 91 at part t (Fig. 18-t). The peak level of the differential wave form is a value to be determined by power sources 93a-93c. Here, the construction of the selection switch 92 (92a-92c) is arranged in such a manner that in Fig. 17 setting a selection switch 92a ON makes the peak level Ea of the power source 93a, setting a selection switch 92b ON makes the peak level Eb of the power source 93b, and setting a selection switch 92c ON makes the peak level Ec of the power source 93c. In this connection, supposing Ea > Eb, setting the selection switch 92a ON makes the peak level Ea, and the signal to be applied to the piezoelectric ceramic 76 becomes as shown in Fig. 18-t. The condition of the selection switch 92b being ON makes the peak level Eb, and the signal to be applied to the piezoelectric ceramic 76 becomes as shown in Fig. 18 t′. Therefore, the quantity of head deviation allows the value of β to be always nearly 0° as it can be changed according to the kind of tape, by turning the switch 92a ON when the rigidity of the tape is lower while when the rigidity of the tape is higher by turning the switch 92b ON.

According to the present embodiment as above, improvement on the contact state between the tape and the rotating head to be made in accordance with the kind of the tape in a simple construction provides a rotating head apparatus which protects deterioration of performance of signal recording or reproduction.

In the present embodiment a selection means was made of a selecting switch, however, it is not only limited to such embodiment alone, but such a configuration also provides the same effect by turning switches ON and OFF with use of cassette detection hole (see Fig. 8).

In this embodiment the kind of the tape is depended on rigidity alone, but it is not limited to it, moreover, controlling the quantity of the head deviation by depending on such other factors as tape thickness may be applicable.

An explanation follows below for a fifth embodiment of the present invention. In this embodiment, a rotating head is deviated in a direction parallel with the tape running direction according to the cylinder rotating speed to keep optimum contact with the tape. Fig. 19 shows a cross-section showing a major part of the fifth embodiment of the present invention, in which the configuration is almost the same as that of the fourth embodiment, but differ in a control circuit 100. In Fig. 35, as is known in the experimental data, it is necessary to make the quantity of head deviation larger at the higher rotation speed of the cylinder at which quantity of the tape lift becomes bigger.

In the fourth embodiment, a control voltage in accordance with the kind of the tape is applied to the piezoelectric ceramic 76, but in the fifth embodiment a control voltage in accordance with the cylinder rotation speed is applied to the piezoelectric ceramic 76.

Fig. 20 shows a circuit diagram showing the details of the control circuit 100, and differs from the circuit as shown in Fig. 17 in a part of selecting means (Switch 92, Power supply 93). In Fig. 20 the peak level of the differential wave shape is varied in accordance with the cylinder rotation speed. The explanation will follow hereinafter by using Fig. 21 and Fig. 22. Fig. 21 shows the case of the cylinder rotation speed of 1,800 rpm while Fig. 22 of 5,400 rpm.

A pulse generator 85 generates a reference pulse signal in the same method as the first embodiment (see point u in Fig. 21 and point U in Fig. 22). Supposing the value of a power source 101 be Ef, the value of a resistor 102a be Ra, the value of a resistor 102b be Rb, and the value of a resistor 102c be Rc, the voltage at point v in Fig. 20 becomes Ef·Rb / (Ra + Rb), and voltage at point v in Fig. 20 becomes Ef·(Rb + Rc) / (Ra + Rb + Rc) as in the same manner as that explained in Fig. 11 of the third embodiment. Here, for example, supposing Ra = Rb = Rc, the voltage at point ℓ is Ef/2 at the cylinder rotation speed of 1,800 rpm and 2Ef/3 at 5,400 rpm. This value corresponds to the peak level in the fourth embodiment, and the remaining circuit configuration is the same as that in Fig. 17. Therefore, the voltage wave form of part w in Fig. 20 becomes as shown in Fig. 21-w or Fig. 22-w.

The head 74 is moved by applying the voltage wave form w outputted from the control circuit 100 to the piezoelectric ceramic 76 as shown in Fig. 16. As mentioned earlier, the higher cylinder rotation speed causes the larger quantity of tape lift. But as is seen from Fig. 21-w and Fig. 22-w, the contact state between the head and the tape is kept stable regardless of the cylinder speed because the higher cylinder rotation speed causes the larger quantity of head deviation.

The selection of the cylinder rotation speed may not be limited to 1,800 rpm and 5,400 rpm, but may be any other speeds, for example 1,800 rpm and 3,600 rpm.

## Claims

1. A rotating head apparatus comprising:
a cylinder (11,12) which guides a magnetic tape (13) along a helical path over a specific circumferential angle, said cylinder including a rotary cylinder (11) which rotates at a specific rotational speed;
a rotating head (14) which is mounted on said rotary cylinder (11) so as to rotate at said specific rotational speed and has a magnetic gap for recording signals on and reproducing signals from said magnetic tape; and
moving means (16,17, 45-49, 76,77) for moving said rotating head relative to said rotary cylinder so as to change a contact state of said rotating head with respect to said magnetic tape;
characterised by further comprising:
a discriminating means (32,43,92) for discriminating the kind of said magnetic tape and outputting a signal indicative of the discriminated kind of said magnetic tape;
a rotational speed detecting means (21-25, 81-85) for detecting the rotational speed of said rotating head and outputting a signal indicative of the detected rotational speed; and
control means (20, 25-31, 34-40, 51-61, 80, 85-91, 100-102) for controlling said moving means according to at least one of the output signal from said discriminating means and the output signal from said rotational speed detecting means to keep said rotating head in such a contact state with said magnetic tape that a center line of said magnetic gap coincides with a normal line to a contacting surface between said rotating head and said magnetic tape.

2. An apparatus according to claim 1, wherein said moving means (16,17, 45-49, 76,77) deviates said rotating head (14) relative to said rotary cylinder (11) so as to change an angle formed between a center line of said magnetic gap and a normal line to a contacting surface between said rotating head and said magnetic tape.

3. An apparatus according to claim 1 or 2, wherein said control means (20, 25-31, 34-40, 85-91) includes: a rotational phase detecting means (25) for detecting a rotational phase of said rotating head and outputting a signal indicative of the detected rotational phase; a means (26-31, 34-38) for generating a periodic saw-tooth waveform voltage signal from the output signal of said rotational phase detecting means; and a means (33,93) for controlling a peak voltage value of the saw-tooth waveform voltage signal according to the output signal from said discriminating means, the peak voltage value controlled saw-tooth waveform voltage signal being supplied to said moving means (16,17, 45-49, 76,77).

4. An apparatus as claimed in claim 1, wherein said moving means moves said rotating head pivotally in a width direction of said magnetic tape so that a center line of said magnetic gap of the rotating head coincides with a normal line to a contacting surface of said rotating head with said magnetic tape.

5. An apparatus as claimed in claim 1, wherein said moving means moves said rotating head pivotally of a longitudinal direction of said magnetic tape so that a center line of said magnetic gap of the rotating head coincides with a normal line to a contacting surface of said rotating head with said magnetic tape.

## Patentansprüche

1. Gerät mit rotierendem Kopf, das aufweist:
einen Zylinder (11,12), der ein Magnetband (13) entlang eines spiralförmigen Wegs über einen spezifischen, umfangsmäßigen Winkel führt, wobei der Zylinder einen Rotationszylinder (11) umfaßt, der sich unter einer spezifischen Rotationsgeschwindigkeit dreht;
einen rotierenden Kopf (14), der an dem Rotationszylinder so befestigt ist, um sich unter einer spezifischen Rotationsgeschwindigkeit zu drehen, und einen magnetischen Spalt zum Aufzeichnen von Signalen auf und zur Wiedergabe von den Signalen von dem magnetischen Band besitzt; und
eine Bewegungseinrichtung (16,17, 45-49, 76,77) zum Bewegen des rotierenden Kopfs relativ zu dem Rotationszylinder so, um einen Kontaktzustand zwischen dem rotierenden Kopf hinsichtlich des magnetischen Bands zu ändern;
gekennzeichnet dadurch, daß es weiterhin aufweist:
eine Diskriminierungseinrichtung (32,43,92) zum Diskriminieren der Art des magnetischen Bands und zur Ausgabe eines Signals, das für die diskriminierte Art des magnetischen Bands kennzeichnend ist;
eine Rotationsgeschwindigkeits-Ermittlungseinrichtung (21-25, 81-85) zur Ermittlung der Rotationsgeschwindigkeit des rotierenden Kopfs und zur Ausgabe eines Signals, das für die ermittelte Rotationsgeschwindigkeit kennzeichnend ist;
eine Steuereinrichtung (20, 25-31, 34-40, 51-61, 80, 85-91, 100-102) zur Steuerung der Bewegungseinrichtung entsprechend mindestens einem Ausgangssignal von der Diskriminierungseinrichtung und dem Ausgangssignal von der Rotationsgeschwindigkeits-Ermittlungseinrichtung, um den rotierenden Kopf in einem solchen Kontaktzustand mit dem magnetischen Band zu halten, daß eine Mittellinie des magnetischen Spalts mit einem Einfallslot zu einer kontaktierenden Oberfläche zwischen dem rotierenden Kopf und dem magnetischen Band übereinstimmt.

2. Gerät nach Anspruch 1, wobei die Bewegungseinrichtung (16,17, 45-49, 76,77) den rotierenden Kopf (14) relativ zu dem rotierenden Zylinder so ablenkt, um einen Winkel zu verändern, der zwischen einer Mittellinie des magnetischen Spalts und einem Einfallslot zu einer kontaktierenden Oberfläche zwischen dem rotierenden Kopf und dem magnetischen Band gebildet ist.

3. Gerät nach Anspruch 1 oder 2, wobei die Steuereinrichtung (20, 25-31, 34-40, 85-91) umfaßt: eine Rotationsphasen-Ermittlungseinrichtung (25) zur Ermittlung einer Rotationsphase des rotierenden Kopfs und zur Ausgabe eines Signals, das für die ermittelte Rotationsphase kennzeichnend ist; eine Einrichtung (26-31, 34-38) zur Erzeugung eines periodischen Spannungssignals in Sägezahn-Wellenform aus dem Ausgangssignal der Rotationsphasen-Ermittlungseinrichtung; und eine Einrichtung (33,93) zur Steuerung eines Spitzenspannungswerts des Spannungssignals in Sägezahn-Wellenform gemäß dem Ausgangssignal von der Diskriminierungseinrichtung, wobei das über den Spitzenspannungswert gesteuerte Spannungssignal in Sägezahn-Wellenform zu der Bewegungseinrichtung (16,17, 45-49, 76,77) zugeführt wird.

4. Gerät nach Anspruch 1, wobei sich die Bewegungseinrichtung des drehenden Kopfs schwenkbar in einer Breitenrichtung des magnetischen Bands so bewegt, daß eine Mittellinie des magnetischen Spalts des drehenden Kopfs mit einem Einfallslot zu einer kontaktierenden Oberfläche des rotierenden Kopfs mit dem magnetischen Band übereinstimmt.

5. Gerät nach Anspruch 1, wobei die Bewegungseinrichtung den drehenden Kopf schwenkbar in einer Längsrichtung des magnetischen Bands so bewegt, daß eine Mittellinie des magnetischen Spalts des drehenden Kopfs mit einem Einfallslot zu einer kontaktierenden Oberfläche des rotierenden Kopfs zu dem magnetischen Band übereinstimmt.

## Revendications

1. Appareil à tête rotative comprenant:
un cylindre (11, 12) qui guide une bande magnétique (13) le long d'un trajet hélicoïdal sur un angle circonférentiel particulier, ledit cylindre comportant un cylindre rotatif (11) qui tourne à une vitesse de rotation particulière ;
une tête rotative (14) qui est montée sur ledit cylindre rotatif (11) afin de tourner à ladite vitesse de rotation particulière et qui possède un entrefer magnétique permettant d'enregistrer des signaux sur ladite bande magnétique et de reproduire des signaux à partir de celle-ci ; et
un moyen de déplacement (16, 17, 45-49, 76, 77) servant à déplacer ladite tête rotative par rapport audit cylindre rotatif de façon à modifier l'état de contact de ladite tête rotative par rapport à ladite bande magnétique ;
caractérisé en ce qu'il comprend en outre :
un moyen de discrimination (32, 43, 92) servant à déterminer le type de ladite bande magnétique et à délivrer un signal indicatif du type ainsi déterminé pour ladite bande magnétique ;
un moyen de détection de vitesse de rotation (21-25, 81-85) servant à déterminer la vitesse de rotation de ladite tête rotative et à délivrer un signal indicatif de la vitesse de rotation ainsi déterminée ; et
un moyen de commande (20, 25-31, 34-40, 51-61, 80, 85-91, 100-102) servant à commander ledit moyen de déplacement en fonction d'au moins un des signaux de sortie respectivement fournis par ledit moyen de discrimination et ledit moyen de détection de vitesse de rotation afin de maintenir ladite tête rotative dans un état de contact avec ladite bande magnétique, qui est tel que l'axe de symétrie dudit entrefer magnétique coïncide avec une ligne perpendiculaire à la surface de contact entre ladite tête rotative et ladite bande magnétique.

2. Appareil selon la revendication 1, où ledit moyen de déplacement (16, 17, 45-49, 76, 77) écarte ladite tête rotative (14) vis-à-vis dudit cylindre rotatif (11) de façon à modifier l'angle formé entre l'axe de symétrie dudit entrefer magnétique et une ligne perpendiculaire à la surface de contact entre ladite tête rotative et ladite bande magnétique.

3. Appareil selon la revendication 1 ou 2, où ledit moyen de commande (20, 25-31, 34-40, 85-91) comporte : un moyen de détection de phase de rotation (25) servant à déterminer la phase de rotation de ladite tête rotative et à délivrer un signal indicatif de la phase de rotation ainsi déterminée ; un moyen (26-31,34-38) servant à produire un signal de tension à forme d'onde en dents de scie périodique à partir du signal de sortie dudit moyen de détection de phase de rotation ; et un moyen (33, 93) servant à ajuster la valeur de tension de crête du signal de tension à forme d'onde à dents de scie en fonction du signal de sortie dudit moyen de discrimination, le signal de tension à forme d'onde en dents de scie qui est ajusté par la valeur de tension de crête étant fourni audit moyen de déplacement (16, 17, 45-49, 76, 77).

4. Appareil selon la revendication 1, où ledit moyen de déplacement déplace ladite tête rotative de manière pivotante dans la direction de la largeur de ladite bande magnétique, de façon que l'axe de symétrie dudit entrefer magnétique de la tête rotative coïncide avec une ligne perpendiculaire à la surface de contact de ladite tête rotative avec ladite bande magnétique.

5. Appareil selon la revendication 1, où ledit moyen de déplacement déplace ladite tête rotative de manière pivotante dans la direction longitudinale de ladite bande magnétique, de façon que l'axe de symétrie dudit entrefer magnétique de la tête rotative coïncide avec une ligne perpendiculaire à la surface de contact de ladite tête rotative avec ladite bande magnétique.
